## Europäisches Patentamt
## European Patent Office
## Office européen des brevets

(19)

(11) Numéro de publication: **0 024 326**
**B1**

(12)

# FASCICULE DE BREVET EUROPEEN

(45) Date de publication du fascicule du brevet: **16.05.84**

(51) Int. Cl.³: **G 02 B 15/10**

(21) Numéro de dépôt: **80104588.1**

(22) Date de dépôt: **02.08.80**

(54) Dispositif optique afocal.

(30) Priorité: **14.08.79 CH 7421/79**

(43) Date de publication de la demande:
**04.03.81 Bulletin 81/09**

(45) Mention de la délivrance du brevet:
**16.05.84 Bulletin 84/20**

(84) Etats contractants désignés:
**DE FR GB IT**

(56) Documents cités:
**DE-A-2 527 105**
**DE-B-1 053 810**
**FR-A-2 136 852**

**SMPTE JOURNAL, Vol. 88, avril 1979 J. VASATA "The Bolex Aspheron: A Super-Wide-Angle Adapter" pages 236 et 237**

(73) Titulaire: **Campiche, Eric**
**8,Chemin des Villas**
**CH-1093 LA CONVERSION, Vaud (CH)**

(72) Inventeur: **Campiche, Eric**
**8,Chemin des Villas**
**CH-1093 LA CONVERSION, Vaud (CH)**

(74) Mandataire: **Micheli, Michel Pierre et al**
**MICHELI & CIE 118, Rue du Rhône Case Postale 47**
**CH-1211 Geneve 6 (CH)**

Courier Press, Leamington Spa, England.

# 0 024 326

## Description

Pour la photographie sous-marine on a recours généralement à un objectif de prise de vue super-grand-angle qui autorise la prise de vue au vol, sans viser, la très grande profondeur de champ permettant également d'afficher une distance moyenne fixe. L'effet des particules en suspension est aussi considérablement réduit, et l'éclairage obtenu au moyen du flash gradement amélioré, du fait de la diminution de la distance de prise de vue pour le même cadrage qu'avec un objectif ordinaire.

Les appareils équipés d'un objectif super-grand-angle disponibles sur le marché sont toutefois coûteux et souvent mal adaptés à un emploi dans l'eau.

L'invention vise à fournir un dispositif optique préobjectif afocal d'un montage facile sur les appareils munis d'objectif à angle normal, en vue d'en agrandir notablement le champ.

On connaît des brevets FR—A—1.033.101 et FR—A—2.136.852 des systèmes optiques pour observer dans l'eau formés d'une lentille plan-concave dont la face plane est en contact avec l'eau et d'une lentille biconvexe respectivement plan-convexe. Ce système optique est étanche et monté de façon étanche sur l'objectif d'un appareil de prise de vue; il permet d'augmenter le champ d'objet.

Les inconvénients de tels systèmes optiques sont qu'ils ne peuvent être utilisés que sous l'eau; devant être enlevés lorsque l'utilisateur désire photographier dans l'air, et que leur fixation sur l'objectif de l'appareil de prise de vue doit se faire de façon étanche, ce qui rend son utilisation courante difficile.

Le dispositif selon l'invention défini à la revendication 1, constitue un accessoire amovible destiné à être placé sur un objectif de prise de vue, afin que le champ objet de l'ensemble soit agrandi par rapport à celui de l'objectif seul et qu'il puisse être utilisé indifféremment dans l'air et dans l'eau sans modifier sa mise au point.

Le dessin annexé représente, à titre d'exemple, deux formes d'exécution du dispositif objet de l'invention.

La figure 1 est une coupe axiale de la première forme d'exécution.

La figure 2 est une représentation schématique de l'optique des deux formes d'exécution.

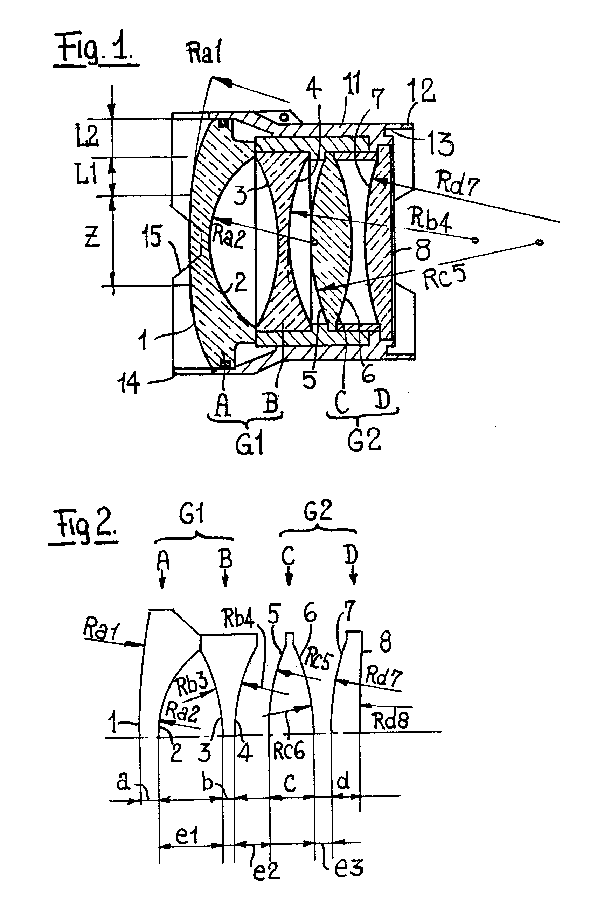

Le dispositif représenté à la figure 1 comprend un boîtier tubulaire 11 présentant à son extrémité arrière une jupe 12 délimitant un logement annulaire 13 permettant d'emboîter le dispositif sur l'extrémité de l'objectif normal d'un appareil de prise de vue (appareil photographique ou caméra).

L'optique logée dans le boîtier 1 est composée de quatre lentilles A, B, C et D en verre acrylique (Plexiglas).

Les deux lentilles A et B, divergeantes, constituent une groupe frontal divergeant G1 de focale F1, tandis que les deux lentilles C et D, convergeantes, constituent une groupe arrière positif G2 de focale F2.

La lentille A du groupe frontal est un ménisque divergeant dont la face 1 à rayon de courbure le plus grand est située à l'avant, en contact avec l'air ou l'eau. La seconde lentille B du groupe frontal est une lentille négative équiconcave dont le rayon de courbure $Rb3=Rb4$ est plus grand que le rayon de courbure le plus petit, $Ra2$, du ménisque A, sur sa face arrière 2.

La face antérieure 1 du ménisque est de forme asphérique; elle comporte en son centre une zone circulaire de diamètre Z et de rayon de courbure maximum $Ra1$, entourée de deux couronnes de largeur identique L1 et L2 égales à $Z/2$, avec des rayons de courbure plus petits que $Ra1$, et plus petit pour la couronne extérieure que pour la couronne intérieure. Le degré d'asphérisation est de préférence tel que l'écart par rapport au rayon sphérique est supérieur à 1% de la valeur de ce rayon au diamètre extérieur.

La lentille frontale A est protégée des chocs par un débordement 14 du boîtier 1, formant pare-soleil et présentant quatre encoches 15.

La lentille postérieure D du groupe arrière positif G2 est une lentille ménisque dont la face la plus longue 8 est située à l'arrière, en contact avec l'air ou l'eau.

La lentille C, également comprise dans ce groupe G2, est une lentille équi-convexe disposée devant la lentille D et dont le rayon de courbure $Rc5=Rc6$ est plus petit que le rayon de courbure $Rd7$ de la face avant 7 de la lentille D.

Le rayon de courbure $Rb4$ de la face postérieure 4 de la seconde lentille B du groupe frontal divergeant est plus petit que le rayon de courbure $Rc5$ de la face antérieure 5 de la lentille antérieure C du groupe arrière positif G2.

Le tableau suivant donne en relation avec la figure 2 les valeurs des rayons de courbure, épaisseurs et espacements des lentilles, d'une part, pour cette première forme d'exécution figurant sous "Exemple 1" comprenant des lentilles en verre acrylique (Plexiglas) avec le même indice $n_v=1,4921$ pour toutes les lentilles et, d'autre part, pour une seconde forme d'exécution figurant sous "Exemple II" comprenant des lentilles en verre K5 avec le même indice $n_v=1,52249$ pour toutes les lentilles.

2

| | Exemple I | Exemple II |
|---|---|---|
| | Plexiglas $n_v=1,4921$ | Verre K5 $n_v=1,52249$ |
| Ra1 | 177,00 | 187,90 |
| Ra2 | 28,29 | 30,04 |
| a | 17,00 | 17,00 |
| e1 | 5,00 | 5,00 |
| Rb3 | −49,35 | −52,40 |
| Rb4 | 49,35 | 52,40 |
| b | 3,00 | 3,00 |
| e2 | 8,45 | 7,82 |
| Rc5 | 60,54 | 64,20 |
| Rc6 | −60,54 | −64,20 |
| c | 13,30 | 11,30 |
| e3 | 5,00 | 5,00 |
| Rd7 | 68,80 | 69,54 |
| Rd8 | 556,80 | 621,10 |
| d | 7,00 | 7,00 |
| Focale de G1: | F1=−23,5085 | F1=−23,5085 |
| Focale de G2: | F2=60,3543 | F2=60,3543 |

Le rayon de courbure Rd8 de la face arrière 8 de la lentille ménisque postérieure D du groupe arrière positif G2 est lié à la valeur du rayon Ra1 de la lentille A par une relation déterminée établie en fonction des caractéristiques des divers milieux. La solution de l'équation de conjugaison donne la condition suivante qui est remplie pour ces dispositifs:

$$(0,8)\times(n_v/n_e)\times(F2/F1)\times Ra1 < Rd8 < (1,25)\times(n_v'/n_e)\times(F2/F1)\times Ra1 \qquad (I)$$

dans laquelle:
- $n_v$ est l'indice de la matière du ménisque antérieur A
- $n_v'$ est l'indice de la matière de la lentille postérieure D
- $n_e$ est l'indice de l'eau
- F1 la focale du groupe frontal divergeant G1
- F2 la focale du groupe arrière convergeant G2

et les rayons de courbure Rd8 et Ra1 sont de même signe.

Ainsi pour l'exemple I, la formule (I) donne avec les valeurs reprises du tableau et un indice de l'eau:

$$n_e=1,339 \text{ donnant } n_v/n_e=n_v'/n_3=1,11433906$$
$$(0,8)\times(1,11433906)\times(60,3543/23,5085)\times(177)$$
$$=405,1015$$

$$(1,25)\times(1,11433906)\times(60,3543/23,5085)\times(177)$$
$$=632,971,$$

soit $405,10 < 556,8 < 632,971$, remplissant la condition énoncée.

On notera que le signe des rayons Ra1 et Rd8 ets identique. Il s'agit là d'une condition essentielle pour que la mise au point reste constante malgré le changement des milieux extrêmes.

Un cas particulier bien connu est celui où les rayons de courbure Ra1 et Rd8 des faces extrêmes sont infinis.

Ainsi, dans une variante de l'exemple 1, comportant les mêmes lentilles A, B et C, la lentille postérieure D peut être une lentille plan-convexe dont la face plane 8 est située à l'arrière en contact avec l'air ou l'eau, le rayon de courbure sa face convexe 7 étant: rd7=74,76. Comme le rayon Rd8 est plan, la condition (I) présentée n'est pas rigoureusement observée, et l'écart entre la mise au point dans l'air et dans l'eau reste assez important, sand toutefois rendre le dispositif inutilisable. Il permet les prises de vues rapprochées sur le bateau, au sortie de l'eau.

Dans le texte et le tableau, toutes les dimensions sont données en millimètres.

## Revendications

1. Dispositif optique afocal amovible pour objectif de prise de vue pouvant êyre utilisé aussi bien à l'air que dans l'eau comportant une groupe frontal divergent (G1) et un groupe arrière convergent (G2) formé chacun de deux lentilles (A, B; C, D), caractérisé par le fait que le rayon de courbure (Rd8) de la face arrière de la lentille postérieure (D) du groupe arrière (G2) et le rayon de courbure (Ra1) de la lentille avant (A) du groupe frontal (G1) sont de même signe et de valeur finie; et par le fait que ces ceux rayons de courbure (Ra1; Rd8) sont liés par la relation suivante:

$$(0,8) \times (n_v/n_e) \times (F2/F1) \times Ra1 < Rd8 < (1,25) \times (n_v'/n_e) \times (F2/F1) \times Ra1 \qquad \text{(I)}$$

dans laquelle:

$n_v$ est l'indice de la matière du ménisque antérieur A
$n_v'$ est l'indice de la matière de la lentille postérieure D
$n_e$ est l'indice de l'eau
F1 la focale de groupe frontal divergeant G1
F2 la focale du group arrière convergeant G2

afin que le champs objet de l'ensemble soit agrandi par rapport à celui de l'objectif seul et qu'il puisse être utilisé indifféremment dans l'air et dans l'eau sans modifier sa mise au point.

2. Dispositif selon la revendication 1, caractérisé par le fait que la lentille antérieure du groupe frontal (G1) est un ménisque divergent (A) dont la face (1), de plus grand rayon de courbure, est située à l'avant en contact avec l'air ou l'eau; et que la lentille postérieure (B) de ce groupe frontal (G1) est négative et équiconcave, la valeur absolue de sens rayons de courbure (Rb3=Rb4) étant plus grande que le rayon de courbure (Ra2) le plus petit du ménisque (A); et par le fait que la lentille postérieure du groupe arrière (G2) est un ménisque (D) dont la face arrière (8) en contact avec l'air ou l'eau présente le plus grand rayon de courbure (Rd8), et que la lentille antérieure de ce groupe arrière est une lentille équiconvexe (C) dont les rayons de courbure (Rc5=Rc6) sont plus petits en valeur absolue que le rayon de courbure (Rd7) de la face avant du ménisque (D).

3. Dispositif selon la revendication 1 ou la revendication 2, caractérisé par le fait que le rayon de courbure (Rb4) de la face postérieure (4) de la lentille postérieure (B) du groupe frontal (G1) est plus petit, en valeur absolue, que le rayon de courbure (Rc5) de la face antérieure (5) de la lentille antérieure (C) du groupe arrière (G2).

4. Dispositif selon l'une des revendications 1 à 3, caractérisé par le fait que la face antérieure (1) en contact avec l'air ou l'eau de la lentille antérieure du groupe frontal (G1) est une surface asphérique dont le degré d'asphéricité est tel que l'écart entre le rayon de courbure au centre et le rayon de courbure à la périphérie est supérieur à 1% de ce dernier rayon de courbure.

**Patentansprüche**

1. Abnehmbare optische Vorrichtung ohne Brennpunkt für Aufnahmeobjekte, die sowohl an der Luft als auch im Wasser verwendet werden kann, mit

— einer stirnseitigen divergenten Gruppe (G1) und
— einer rückwärtigen konvergenten Gruppe (G2), die jeweils aus zwei Linsen (A, B; C, D) bestehen, dadurch gekennzeichnet, daß
— der Krümmungsradius (Rd8) der rückseitigen Fläche der hinteren Linse (D) der rückwärtigen Gruppe (G2) und der Krümmungsradius (Ra1) der vorderen Linse (A) der stirnseitigen Gruppe (G1) gleiche Vorzeichen und einen endlichen Betrag haben und
— die beiden Krümmungsradien (Ra1; Rd8) über die folgende Beziehung korreliert sind:

$$(0,8) \cdot (n_v/n_e) \cdot (F2/F1) \cdot Ra1 < Rd8 < (1,25) \cdot n_v'/n_e) \cdot (F2/F1) \cdot Ra1 \qquad \text{(I)}$$

wobei:

$n_v$ der Brechungsindex des Materials des vorderen Meniskus A ist,
$n_v'$ der Brechungsindex des materials der hinteren Linse D ist,
$n_e$ der Brechungsindex von Wasser ist,
F1 die Brennweite der stirnseitigen divergenten Gruppe (G1) ist und
F2 die Brennweite der rückwärtigen konvergenten Gruppe (G2) ist,

damit das Objektfeld der Gesamtanordnung gegenüber dem des alleinigen Objectivs vergrößert ist und die Vorrichtung gleichermaßen in Luft und in Wasser verwendet werden kann, ohne daß dabei seine scharfe Einstellung verändert wird.

2. Vorrichtung nach Anspruch 1, dadurch gekennzeichnet, daß

— die vordere Linse der stirnseitigen Gruppe (G1) ein divergenter Miniskus (A) ist, dessen Fläche (1) mit dem größeren Krümmungsradius die mit der Luft oder dem Wasser in Berührung stehende Vorderseite ist,
— die hintere Linse (B) dieser stirnseitigen Gruppe (G1) negativ und äquikonkav ist, der Absolutbetrag ihrer Krümmungsradien (Rb3=Rb4) größer als der kleinere Krümmungsradius (Ra2) des Miniskus (A) ist und
— die hintere Linse der rückwärtigen Gruppe (G2) ein Miniskus (D) ist, dessen mit Luft oder Wasser in Berührung stehende rückseitige Fläche (8) den größten Krümmungsradius (Rd8) aufweist und

4

—die vordere Linse dieser rückwärtigen Gruppe eine äquikonvexe Linse (C) ist, deren Krümmungsradien (Rc5=Rc6) kleinere Absolutbeträge haben als der des Krümmungsradius (Rd7) der vorderfläche des Miniskus (D).

3. Vorrichtung nach Anspruch 1 oder 2, dadurch gekennzeichnet,

— daß der Krümmungsradius (Rb4) der rückseitigen Fläche (4) der hinteren Linse (B) der stirnseitigen Gruppe (G1) einen kleineren Absolutbetrag hat, als der Krümmungsradius (Rc5) der Vorderfläche (5) der vorderen Linse (C) der rückwärtigen Gruppe (G2).

4. Vorrichtung nach einem der Ansprüche 1 bis 3, dadurch gekennzeichnet,

— daß die mit Luft oder Wasser in Berührung stehende Vorderfläche (1) der vorderen Linse der stirnseitigen Gruppe (G1) eine asphärische Fläche ist, deren Asphärität derart ist, daß die Differenz zwischen dem Krümmungsradius in der Mitte der Linse und dem Krümmungsradius im Randbereich der Linse größer als 1% des letzteren Krümmungsradius ist.

**Claims**

1. Removable afocal optical device for picture taking objectiv which can be used in the air as well as under water comprising a diverging frontal group (G1) and a converging rear group (G2) each formed of two lenses (A, B; C, D), characterized by the fact that the radius of curvature (Rd8) of the rear face of the rear lens (D) of the rear group (G2) and the radius of curvature (Ra1) of the front lens (A) of the frontal group (G1) have the same sign and a finite value; and by the fact that these two radii of curvature (Ra1; Rd8) are given the following relation:

$$(0,8) \times (n_v/n_e) \times (F2/F1) \times Ra1 < Rd8 < (1,25) \times (n_v'/n_e) \times (F2/F1) \times Ra1 \tag{I}$$

in which:
$n_v$ is the index of the material of the fore meniscus A
$n_v'$ is the index of the material of the rear lens D
$n_e$ is the index of water
F1 is the focal length of the diverging frontal group (G1)
F2 is the focal length of the converging rear group (G2)

so that the object field of the whole assembly be enlarged with respect to the one of the sole objectiv and that it can be used indifferently in the air and under water without modification of its distance setting.

2. Device according to claim 1, characterized by the fact that the front lense of the fore group (G1) is a diverging meniscus (A) the face (1) of which having the greatest radius of curvature is located in the front in contact with the air or water; and that the rear lens (B) of this frontal group (G1) is negativ and equiconcave, the absolute value of its radii of curvature (Rb3=Rb4) being greater than the smallest radius of curvature (Ra2) of the meniscus (A); and by the fact that the rear lens of the rear group (G2) is a meniscus (D) the rear face of which (8) in contact with the air or water has the greatest radius of curvature (Rd8), and that the front lens of this rear group (G2) is an equiconvex lens (C) the radii of curvature (Rc5=Rc6) are less in absolute value than the radius of curvature (Rd7) of the front face of the meniscus (D).

3. Device according to claim 1 or claim 2, characterized by the fact that the radius of curvature (Rb4) of the rear face (4) of the rear lens (B) of the front group (G1) is less, in absolute value, than the radius of curvature (Rc5) of the front face (5) of the front lense (C) of the rear group (G2).

4. Device according to one of claims 1 to 3, characterized by the fact that the front face (1) in contact with the air or the water of the front lense of the front group (G1) is an aspherical surface the amount of asphericity of which is such that the difference between the radius of curvature of which at its center and the radius of curvature of which at its periphery is greater than 1% of said latter radius of curvature.

5

Fig. 1.

Fig 2.